# EUROPÄISCHE PATENTSCHRIFT

(11) **EP 0 864 112 B1**
(45) Veröffentlichungstag und Bekanntmachung des Hinweises auf die Patenterteilung: **02.04.2003**
(21) Anmeldenummer: 97931709.6
(22) Anmeldetag: 07.07.1997
(51) Int. Cl.: G02C 7/02

(54) **PROGRESSIVES BRILLENGLAS**
PROGRESSIVE SPECTACLE LENSES
VERRE DE LUNETTE PROGRESSIF

(30) Priorität: 05.07.1996 DE 19627006
(43) Veröffentlichungstag der Anmeldung: 16.09.1998
(73) Patentinhaber: Rodenstock GmbH, 80469 München (DE)
(72) Erfinder: ALTHEIMER, Helmut, D-87650 Baisweil (DE); ESSER, Gregor, D-85540 Haar (DE); PFEIFFER, Herbert, D-81247 München (DE); BARTH, Rudolf, D-85256 Vierkirchen (DE); FÜSS, Monika, D-80337 München (DE); HAIMERL, Walter, D-80337 München (DE)
(74) Vertreter: Münich, Wilhelm, Dr.
(86) Internationale Anmeldenummer: DE9701425
(87) Internationale Veröffentlichungsnummer: WO98001787

(56) Entgegenhaltungen:
- EP-A- 0 039 497
- EP-A- 0 452 802
- WO-A-95/27229
- DE-A- 3 635 777

## Beschreibung

### Technisches Gebiet

Die Erfindung bezieht sich auf ein progressives Brillenglas gemäß dem Oberbegriff des Patentanspruchs 1.

### Stand der Technik

Progressive Brillengläser mit den Merkmalen des Oberbegriffs des Patentanspruchs 1 sind beispielsweise aus der DE-C-30 16 935 oder der WO 95/27229 bekannt. Auf die letztgenannte Druckschrift wird im übrigen zur Erläuterung aller hier nicht im einzelnen definierten Begriffe ausdrücklich verwiesen.

Die bekannten gattungsgemäßen progressiven Brillengläser weisen eine oder zwei Flächen mit kontinuierlich variierendem Flächenbrechwert (progressive Fläche) auf. Auf der progressiven Fläche steigt der Flächenbrechwert von dem jeweiligen zum Sehen in die Ferne geeigneten Wert BK [dpt] im Fernbezugspunkt mit den (im Rahmen dieser Anmeldung gewählten) Koordinaten x = 0 mm, y = 8 mm im unteren Bereich des Fernteils längs einer gewundenen Linie auf einen zum Sehen in die Nähe geeigneten Wert BF [dpt] im Nahbezugspunkt, der im oberen Bereich des Nahteils liegt. Der Wert BF ist um den Wert Add [dpt] der Addition höher als der Flächenbrechwert BK im unteren Bereich des Fernteils.

Der Verlauf der gewundenen Linie, die im folgenden auch als Hauptlinie bezeichnet wird, ist so gewählt, daß sie zumindestens in etwa mit der Hauptblicklinie bei Blicksenkung, d.h. dem Durchstoßpunkt des Sehstrahls bei Blicksenkung durch die Fläche mit kontinuierlich variierendem Brechwert zusammenfällt. Bei Brillengläsern, bei denen lediglich eine Fläche - in der Regel die Vorderfläche - des Brillenglases zur Brechwertänderung beiträgt, ist die augenseitige Fläche sphärisch oder asphärisch bzw. bei astigmatischer Verordnung torisch oder atorisch gestaltet.

Bei den bekannten progressiven Brillengläsern der eingangs genannten Art ist die Fernsichtzone vergleichsweise groß, so daß sie dem Brillenträger einen guten Überblick über einen großen Bereich ohne Kopfdrehung gestattet.

Die Nahsichtzone ist jedoch vergleichsweise schmal, so daß bereits beim Lesen einer Zeitung Kopfdrehungen erforderlich sind, um mehrere Spalten zu überblicken. Dabei haben beim Stand der Technik vor allem Brillengläser, die in der Fernsichtzone eine negative Wirkung haben und aus einem hochbrechenden Material gefertigt sind, eine besonders schmale Nahsichtzone.

### Darstellung der Erfindung

Der Erfindung liegt die Aufgabe zugrunde, ein progressives Brillenglas, das insbesondere im Fernbezugspunkt eine negative Wirkung haben kann und aus einem Material mit einer Brechzahl bzw. einem Brechungsindex > 1,58 gefertigt ist, anzugeben, das eine vergleichsweise breite Nahsichtzone aufweist.

Eine erfindungsgemäße Lösung dieser Aufgabe ist im Patentanspruch 1 angegeben. Weiterbildungen der Erfindung sind Gegenstand der Ansprüche 2 ff.

Erfindungsgemäß weist der Betrag des Flächenastigmatismus wenigstens einer der zur Brechwertänderung beitragenden Flächen längs mindestens eines Schnitts des Brillenglases mit einer horizontalen Ebene (y=const, i.f. als Horizontalschnitt bezeichnet) ein lokales Maximum, das einen Abstand von nicht mehr als 4 mm, bevorzugt nicht mehr als 2 mm von der Hauptlinie hat, und wenigstens ein lokales Minimum auf, das nicht auf der Hauptlinie liegt, und dessen Abstand von der Hauptlinie größer ist als der des lokalen Maximums.

Das Konzept des erfindungsgemäßen progressiven Brillenglases bricht damit mit der herkömmlichen Vorgehensweise: Bei bekannten Progressivgläsern hat der Betrag des Flächenastigmatismus auf dem Hauptmeridian bzw. der Hauptlinie ein - in der Regel sogar absolutes - Minimum. Bei Brillengläsern, bei denen die Hauptlinie als sogenannte Nabellinie, d.h. als Folge von Punkten mit dem Flächenastigmatismus 0 dpt ausgebildet ist, ergibt sich dies bereits aus dem Satz von Minkwitz, gemäß dem der Flächenastigmatismus senkrecht zu einer Nabellinie mit dem doppelten Betrag des Gradienten des Flächenbrechwertes auf der Nabellinie ansteigt.

Auch bei Brillengläsern, bei denen der Flächenastigmatismus auf der Hauptlinie nicht 0 dpt beträgt, sondern bewußt ein bestimmter Betrag des Flächenastigmatismus zur Verringerung der peripheren Bildfehler "in Kauf genommen" wird, hat der Betrag des Flächenastigmatismus auf Horizontalschnitten auf der Hauptlinie ein - in der Regel sogar absolutes - Minimum. Hierzu wird auf die eingangs genannte DE-C-30 16 935 verwiesen, in der progressive Brillengläser mit einem Flächenastigmatismus auf der Hauptblicklinie beschrieben wird, der zur Korrektur der peripheren Bildfehler in der Progressionszone vom Wert 0 dpt abweicht. Dabei vermittelt die DE-C-30 16 935 insbesondere die Lehre, daß der Astigmatismus in der Progressionszone ausgehend vom Wert 0 dpt am unteren Rand der Fernsichtzone in der Progressionszone ein Maximum erreichen sollte und anschließend wieder auf den Wert 0 dpt im oberen Bereich der Nahsichtzone abfallen sollte.

Erfindungsgemäß ist nun erkannt worden, daß ein besser korrigiertes Brillenglas mit insbesondere breiterem Nahteil erhalten wird, wenn dieses herkömmliche Konzept aufgegeben wird.

Bei einem Brillenglas, bei dem gemäß Anspruch 3 entsprechend dem normalen Anwendungsfall eine Fernsichtzone vorgesehen ist, die im oberen Teil des Brillenglases angeordnet ist, und bei dem die Nahsichtzone(n) im unteren Teil des Brillenglases angeordnet ist (sind), ist es besonders bevorzugt, wenn der oder die Horizontalschnitte, auf denen ein lokales Maximum des Betrages des Flächenastigmatismus auftritt, im unteren Teil der Progressionszone und/oder im oberen Teil des Nahbereichs liegen (Anspruch 4). Hierdurch ist es möglich, eine Nahsichtzone zu erhalten, die um wenigstens 25% breiter als die Nahsichtzone bei bekannten gattungsgemäßen progressiven Brillengläsern ist. Dabei wird entsprechend der üblichen Definition als Begrenzungslinie der Nahsichtzone die Linie angenommen, auf der der Betrag des Gesamtastigmatismus - also nicht des Flächen astigmatismus - den Wert 0,5 dpt hat.

Im Anspruch 5 sind - im Rahmen des in der vorliegenden Anmeldung gewählten Koordinatensystems - numerische γ-Werte angegeben, bei denen für alle Horizontalschnitte ein lokales Maximum des Betrages des Flächenastigmatismus auf bzw. in unmittelbarer Umgebung der Hauptlinie auftritt.

Es ist besonders bevorzugt, das erfindungsgemäße Konzept nur in den in den Ansprüchen 4 bzw. 5 genannten Bereichen des Brillenglases anzuwenden.

Im Anspruch 6 ist deshalb angegeben, daß der Flächenastigmatismus im oberen Teil der Progressionszone und im Fernsichtzone auf der Hauptlinie ein Minimum hat. Diese Lehre ist konträr zu der der DE-C-30 16 935 entnehmbaren Lehre.

Ausdrücklich ist darauf hinzuweisen, daß das erfindungsgemäße Konzept für den Verlauf des Flächenastigmatismus auf Horizontalschnitten nicht bedeutet, daß ein topologisch ähnlicher Verlauf auch beim Gesamtastigmatismus vorliegt:

Gemäß Anspruch 7 hat vielmehr der Gesamtastigmatismus auf der Hauptlinie in jedem Horizontalschnitt zumindest zwischen y = 15 mm und y = -20 mm ein Minimum, das absolut sehr kleine Werte und insbesondere den Wert 0 [dpt] annehmen kann.

Das erfindungsgemäße Konzept bedeutet zwangsläufig, daß . die Hauptlinie zumindest im unteren Bereich der Progressionszone und im oberen Bereich der Nahsichtzone keine Nabellinie ist. Deshalb ist es gemäß Anspruch 8 besonders vorteilhaft, wenn der Flächenastigmatismus im unteren Bereich des Fernteils längs der Hauptlinie in etwa linear ansteigt. Hierdurch ergibt sich ein "weicher" Übergang von der "im wesentlichen Flächenastigmatismus-freien" Fernsichtzone, in der auf der Hauptlinie und in einem großen umgebenden Bereich kein oder nur ein geringer Flächenastigmatismus vorhanden ist, zu den Teilen der Fläche, in denen die Hauptlinie einen Flächenastigmatismus aufweist.

Der Übergang kann dabei gemäß Anspruch 9 dadurch erfolgen, daß die Steigung der Funktion des Flächenastigmatismus auf der Hauptlinie eine Funktion der Basiskurve und der Addition ist.

Weiterhin ist erfindungsgemäß erkannt worden, daß ein besser korrigiertes Brillenglas erhalten wird, wenn die Steigung der Horizontalschnitte am Ort der Hauptlinie als Funktion von y nicht streng monoton ist (Anspruch 10). Die Korrektion kann weiter verbessert werden, wenn gemäß Anspruch 11 die Steigung der Horizontalschnitte am Ort der Hauptlinie als Funktion von y nicht nur nicht streng monoton, sondern gemäß Anspruch 11 überhaupt nicht nicht monoton ist.

Dabei ist es insbesondere nur erfoderlich, die Monotonie der Steigung der Horizontalschnitte am Ort der Hauptlinie als Funktion von y lediglich unterhalb des sog. Fernbezugspunktes aufzugeben (Anspruch 12).

Das erfindungsgemäße Konzept erlaubt es insbesondere, daß der Flächenbrechwert entlang der Hauptlinie im Nahteil so gewählt ist, daß der Gebrauchswert des Brechwerts im Nachteil bis etwa y = -20 mm konstant ist. Ausdrücklich ist festzuhalten, daß dies nicht bedeutet, daß auch der Flächenbrechwert konstant ist. Durch die Konstanz des Gebrauchswerts des Brechwerts ist es dem Brillenträger möglich, den gesamten Nahteil ohne jede Akkomodationsänderung zu nutzen. Hierdurch ist es möglich, beispielsweise am Schreibtisch besonders ermüdungsfrei zu arbeiten (Anspruch 13).

Hierzu trägt auch bei, daß gemäß Anspruch 14 die Hauptkrümmungsrichtungen längs der Hauptlinie im unteren Bereich des Fernteils konstant sind. Durch dieses Merkmal dreht sich nicht die Achse eines eventuell vorhandenen Gesamtastigmatismus.

Das erfindungsgemäße Konzept kann natürlich auch bei Brillengläsern verwirklicht werden, bei denen beide Flächen zur Brechtwertänderung beitragen. Besonders vorteilhaft ist es jedoch bei Brillengläsern, bei denen nur eine Fläche - insbesondere die Vorderfläche (Anspruch 15) - beiträgt, da sich auch bei nur einer zur Brechwertänderung beitragenden Fläche eine hervorragende Korrektion ergibt.

### Kurze Beschreibung der Zeichnung

Die Erfindung wird nachstehend anhand von Ausführungsbeispielen unter Bezugnahme auf die Zeichnung näher beschrieben, in der zeigen:
- Fig. 1a: für ein Brillenglas mit einer Basiskurve von 2,3 dpt, einer Addition von 1,0 dpt und einem Brechungsindex von 1,807 die Flächeneigenschaften entlang der Hauptlinie,
- Fig. 1b: die Steigung der Horizontalschnitte entlang der Hauptlinie für dieses Brillenglas,
- Fig. 1c: die gleichen Flächeneigenschaften wie in Fig. 1a, jedoch längs des Horizontalschnittes bei y =-11 mm,
- Fig. 1d: die gleichen Flächeneigenschaften wie in Fig. 1c, jedoch längs eines Horizontalschnittes bei y = -14 mm,
- Fig. 1e: den Flächenastigmatismus für dieses Brillenglas,
- Fig. 2: eine Darstellung gemäß Fig. 1a für ein Brillenglas mit einer Basiskurve von 2,3 dpt, einer Addition von 2,0 dpt und einem Brechungsindex von 1,807,
- Fig. 3: eine Darstellung gemäß Fig. 1a für ein Brillenglas mit einer Basiskurve von 2,3 dpt, einer Addition von 3,0 dpt und einem Brechungsindex von 1,807,
- Fig. 4: eine Darstellung gemäß Fig. 1a für ein Brillenglas mit einer Basiskurve von 3,2 dpt, einer Addition von 1,0 dpt und einem Brechungsindex von 1,807, und
- Fig. 5: eine Darstellung gemäß Fig. 1a für ein Brillenglas mit einer Basiskurve von 3,2 dpt, einer Addition von 2,0 dpt und einem Brechungsindex von 1,807.

### Darstellung von Ausführungsbeispielen

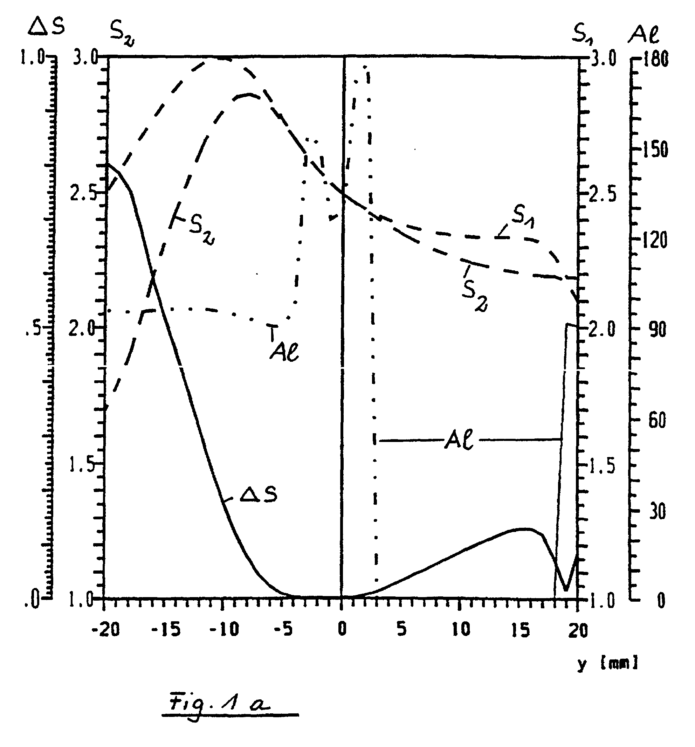

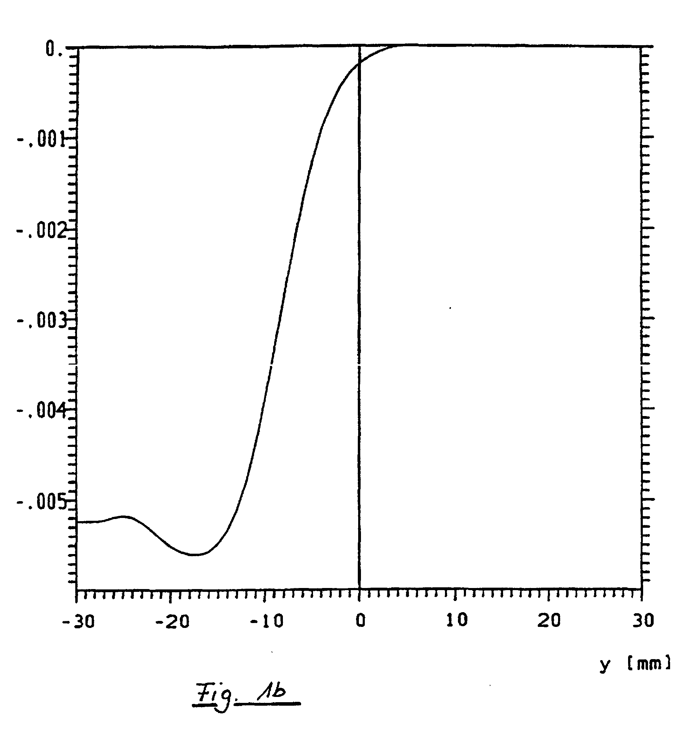

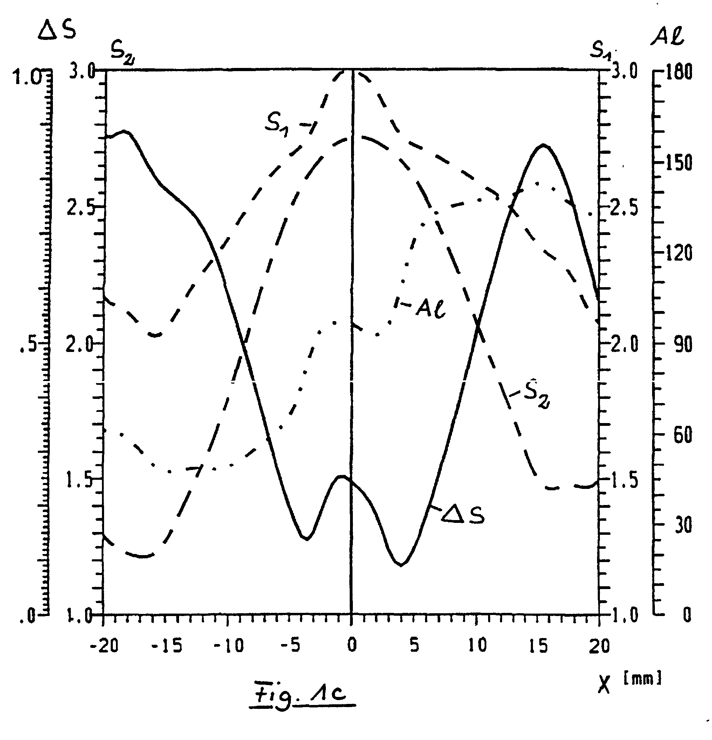

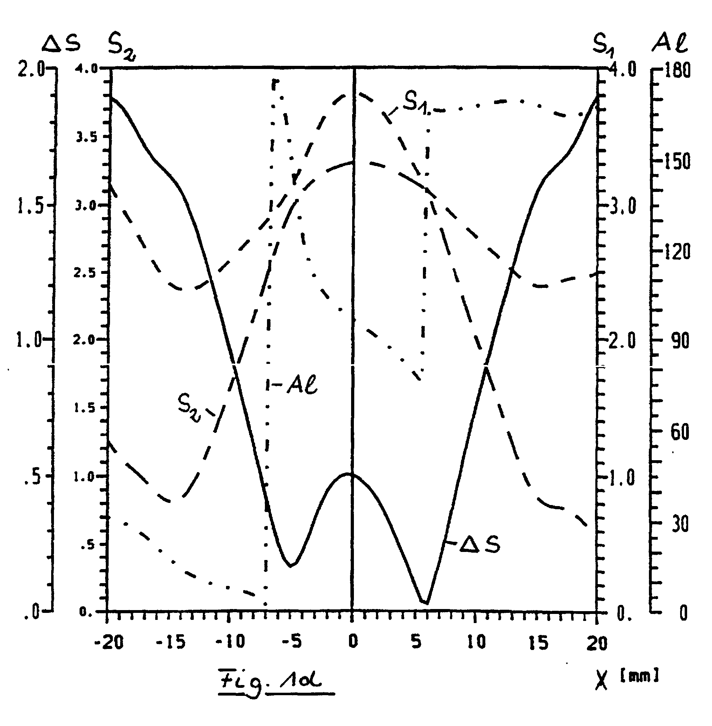

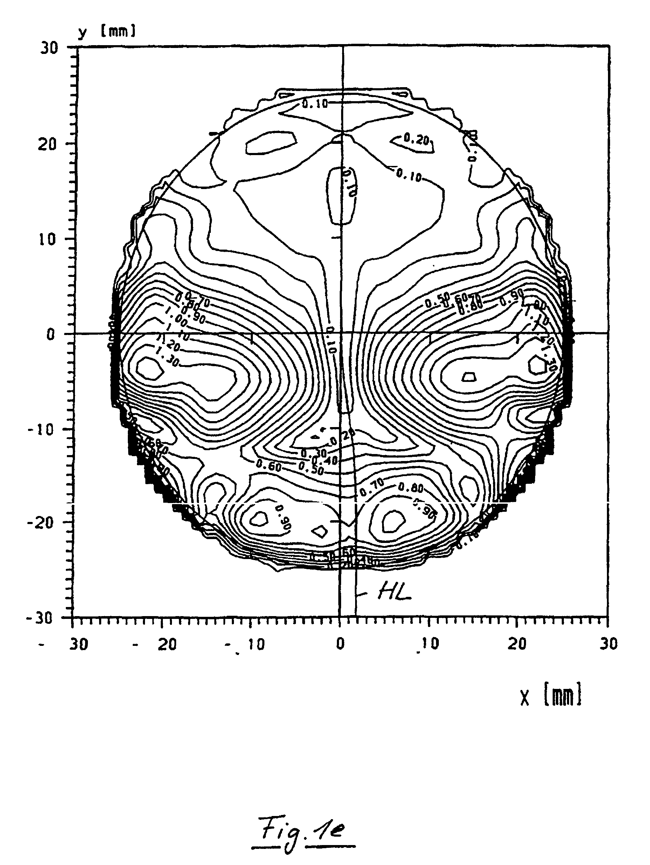

In den Fig. 1a bis 1e sind die Eigenschaften eines ersten Ausführungsbeispiels für ein erfindungsgemäßes Brillenglas dargestellt. Als Koordinatensystem wird durchgängig ein x,y-Koordinatensystem verwendet, bei dem die y-Achse in Gebrauchsstellung die vertikale Achse ist. Der Nullpunkt des Koordinatensystems ist so gewählt, daß der sog. Fernbezugspunkt die Koordinaten x = 0 mm und y = 8 mm hat.

In den Fig. 1a, 1c und 1d sind folgende Größen angegeben:
Flächenastigmatismus ΔS = S₁ - S₂ in dpt
Größerer (S₁) und kleinerer (S₂) Wert der Flächenbrechwerte in den beiden Hauptschnitten, in dpt
Achslage Al des Flächenastigmatismus gemäß TABO in Grad

Das in den Fig. 1a bis 1e dargestellte erste Ausführungsbeispiel hat einen Flächenbrechwert BK im unteren Bereich der Fernsichtzone (auch als Basiskurve bezeichnet) von 2,3 dpt, eine Addition Add, d.h. eine Zunahme des Flächenbrechwerts bis zum Nahteil, von 1,0 dpt und einen Brechungsindex (Brechzahl) von 1,807. Bei dem dargestellten Brillenglas handelt es sich - wie bei allen folgenden Ausführungsbeispielen - um ein "rechtes" Brillenglas: die Projektion der nasalen Verschwenkung der Hauptlinie HL auf die x,y-Ebene ist in Fig. 1e dargestellt.

Die Darstellungen in den Fig. 1a bis 1e beschreiben aufgrund der Angabe der Steigung dz/dx der Schnitte der progressiven Fläche mit Ebenen mit y = const. (i.f. als Horizontalschnitte bezeichnet) eine progressive Fläche vollständig, so daß ein auf dem einschlägigen Gebiet tätiger Durchschnittsfachmann aufgrund dieser Darstellungen in der Lage ist, beispielsweise die Pfeilhöhen der dargestellten Fläche zu berechnen. Damit ist die Erfindung auch ohne weitere Angaben nachvollziehbar.

Die Fig. 1c und 1d zeigen, daß der Betrag des Flächen-Astigmatimus ΔS sowohl bei den Horizontalschnitten der progressiven Fläche mit y = -11 mm als auch mit y = -14 mm ein lokales Maximum hat, das etwa bei x = -1 mm liegt. Da die Hauptlinie HL - wie Fig. 1e zeigt, bei y = -11mm etwa bei x = 1,5 mm und bei y = -14mm etwa bei x ≅ 2mm liegt, beträgt der Abstand von der Hauptlinie HL nicht mehr als 4 mm.

Weiterhin weist der Flächenastigmatismus ΔS zwei lokale Minima auf, die beide nicht auf der Hauptlinie liegen.

Bei y = -11mm ist zumindest der Abstand des lokalen Minimums bei x = -4mm größer als der des lokalen Maximums, während bei y = -14mm der Abstand beider Minima von der Hauptlinie größer als der des lokalen Maximums ist.

Der in Fig. 1e dargestellte Flächenastigmatismus ΔS zeigt, daß die Nahsichtzone verglichen mit bekannten Brillengläsern deutlich verbreitert ist. Weiterhin ist zu ersehen, daß der Flächenastigmatismus im oberen Teil der Progressionszone und im Fernteil auf der Hauptlinie ein Minimum hat.

Zu den weiteren Vorteilen des erfindungsgemäßen Konzepts wird auf die Figuren verwiesen.

Beispielsweise zeigt die Fig. 1b, daß die Steigung der Horizontalschnitte am Ort der Hauptlinie als Funktion von y nicht monoton ist.

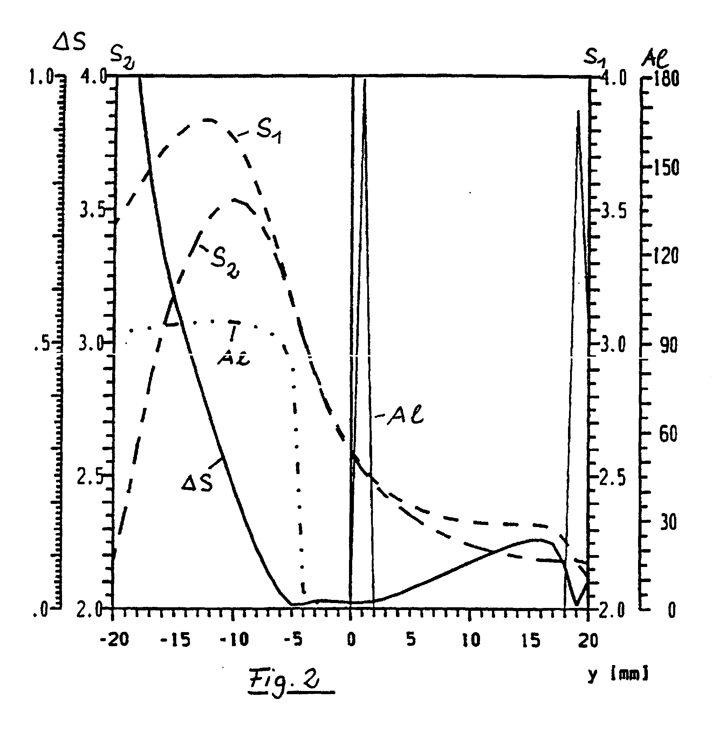

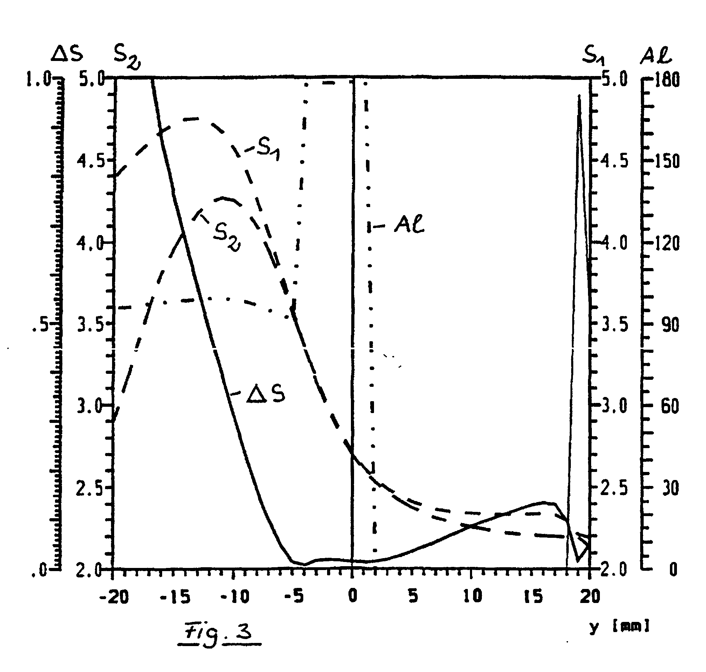

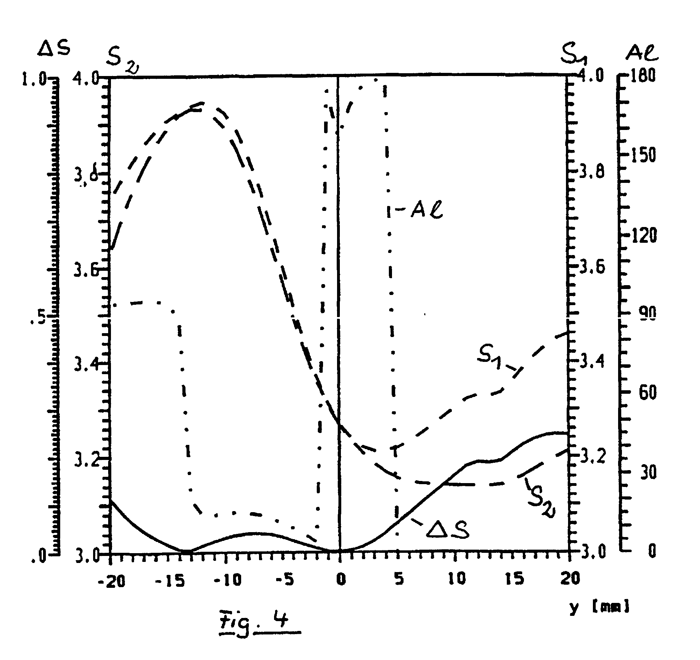

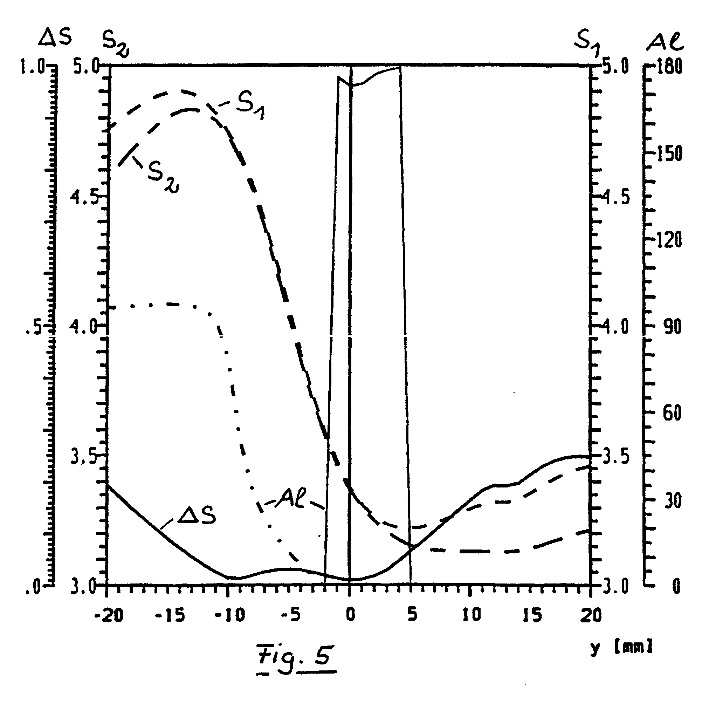

In den Fig. 2 bis 5 sind der Fig. 1a entsprechende Darstellungen, nämlich der Flächenastigmatismus ΔS = S₁ - S₂ (in dpt), der größere (S₁) und kleinere (S₂) Wert der Flächenbrechwerte in den beiden Hauptschnitten (in dpt) und die Achslage Al des Flächenastigmatismus gemäß TABO (in Grad) längs der Hauptlinie für Brillengläser mit anderen Basiskurven und/oder Additionen gezeigt. Die jeweiligen Flächenbrechwerte und Additionen sind in der Kurzbeschreibung zu den einzelnen Figuren angegeben.

Diese Darstellungen erlauben es einem auf dem einschlägigen Gebiet tätigen Fachmann, die in den Fig. 1a bis 1e vollständig offenbarte Fläche auf andere Basiskurven und/oder Additionen umzusetzen.

Bezüglich Einzelheiten und Ausgestaltungen dieser Flächen wird auf die Fig. 2 bis 5 verwiesen. Diese Figuren zeigen beispielsweise, daß der Flächenastigmatismus im unteren Bereich des Fernteils längs der Hauptlinie in etwa linear ansteigt, wobei die Steigung der Funktion des Flächenastigmatismus auf der Hauptlinie eine Funktion der Basiskurve und der Addition ist.

Vorstehend ist die Erfindung anhand von Ausführungsbeispielen ohne Beschränkung des allgemeinen Erfindungsgedankens beschrieben worden, wie er sich aus der allgemeinen Beschreibung sowie den Ansprüche ergibt. Innerhalb dieses allgemeinen Erfindungsgedankens sind selbstverständlich die verschiedensten Abwandlungen möglich:

Wenn beispielsweise in dieser Beschreibung von wenigstens einem Bereich (Fernsichtzone), dessen Brechwert zum Sehen in die Ferne geeignet ist, gesprochen wird, ist damit nicht notwendigerweise gemeint, daß dieser

Bereich zum Sehen "ins Unendliche" ausgelegt ist, er kann auch für das Sehen bei kürzeren Entfernungen, wie beispielsweise 2 m optimiert sein, solange diese Entfernungen nur deutlich größer sind als die Entfernung, für die die Nahsichtzone ausgelegt ist.

Weiterhin ist die Übertragung der vorstehend für "rechte" Gläser offenbarten Prinzipien auf linke Gläser, also vor dem linken Auge angeordnete Gläser ohne Schwierigkeiten möglich.

Ferner ist es möglich, die einzelnen Zonen bzw. Teile anders als angegeben anzuordnen und beispielsweise den Nahteil oben vorzusehen, wie dies bei Pilotenbrillen manchmal gemacht wird.

## Patentansprüche

1. Progressives Brillenglas mit
- wenigstens einem Bereich (Fernsichtzone), dessen Brechwert zum Sehen in die Ferne geeignet ist,
- wenigstens einem Bereich (Nahsichtzone), dessen Brechwert zum Sehen in die Nähe geeignet ist, und
- wenigstens einer Progressionszone, in der sich der Brechwert längs einer gewundenen Linie (Hauptlinie HL) kontinuierlich vom Brechwert der Fernsichtzone auf den Brechwert der Nahsichtzone ändert,
- wobei wenigstens eine Fläche des Brillenglases zur Brechwertänderung beiträgt,
**dadurch gekennzeichnet, daß** der Betrag des Flächenastigmatimus wenigstens einer der zur Brechwertänderung beitragenden Flächen längs mindestens eines Schnitts des Brillenglases mit einer horizontalen Ebene (y=const, i.f. Horizontalschnitt) ein lokales Maximum, das einen Abstand von nicht mehr als 4 mm, bevorzugt 2 mm von der Hauptlinie hat, und wenigstens ein lokales Minimum aufweist, das nicht auf der Hauptlinie liegt, und dessen Abstand von der Hauptlinie größer als der des lokalen Maximums ist.

2. Brillenglas nach Anspruch 1,
**dadurch gekennzeichnet, daß** beidseits des lokalen Maximums ein lokales Minimum des Betrags des Flächenastigmatismus vorhanden ist.

3. Brillenglas nach Anspruch 1 oder 2,
**dadurch gekennzeichnet, daß** entsprechend dem normalen Anwendungsfall eine Fernsichtzone vorgesehen ist, die im oberen Teil des Brillenglases angeordnet ist, und daß die Nahsichtzone(n) im unteren Teil des Brillenglases angeordnet ist (sind).

4. Brillenglas nach Anspruch 3,
**dadurch gekennzeichnet, daß** der oder die Horizontalschnitte, auf denen ein lokales Maximum des Betrages des Flächenastigmatismus auftritt, im unteren Teil der Progressionszone und/oder im oberen Teil des Nahbereichs liegen.

5. Brillenglas nach Anspruch 4,
**dadurch gekennzeichnet, daß** alle Horizontalschnitte, auf denen ein lokales Maximum des Betrages des Flächenastigmatismus auftritt, im Bereich y = -11 mm bis y = -16 mm liegen, wobei der Fernbezugspunkt bei x = 0 und y = 8 mm liegt.

6. Brillenglas nach Anspruch 4 oder 5,
**dadurch gekennzeichnet, daß** der Flächenastigmatismus im oberen Teil der Progressionszone und im Fernteil auf der Hauptlinie ein Minimum hat.

7. Brillenglas nach einem der Ansprüche 4 bis 6,
**dadurch gekennzeichnet, daß** der Gesamtastigmatismus auf der Hauptlinie in jedem Horizontalschnitt zumindest zwischen y = 15 mm und y = -20 mm ein Minimum hat.

8. Brillenglas nach einem der Ansprüche 4 bis 7,
**dadurch gekennzeichnet, daß** der Flächenastigmatismus im unteren Bereich des Fernteils längs der Hauptlinie in etwa linear ansteigt.

9. Brillenglas nach Anspruch 8,
**dadurch gekennzeichnet, daß** die Steigung der Funktion des Flächenastigmatismus auf der Hauptlinie eine Funktion der Basiskurve und der Addition ist.

10. Brillenglas nach einem der Ansprüche 1 bis 9,
**dadurch gekennzeichnet, daß** die Steigung der Horizontalschnitte am Ort der Hauptlinie als Funktion von y nicht streng monoton ist.

11. Brillenglas nach Anspruch 10,
**dadurch gekennzeichnet, daß** die Steigung der Horizontalschnitte am Ort der Hauptlinie als Funktion von y nicht monoton ist.

12. Brillenglas nach Anspruch 11,
**dadurch gekennzeichnet, daß** die Steigung der Horizontalschnitte am Ort der Hauptlinie als Funktion von y nur unterhalb des sog. Fernbezugspunktes nicht monoton ist.

13. Brillenglas nach einem der Ansprüche 1 bis 12,
**dadurch gekennzeichnet, daß** der Flächenbrechwert entlang der Hauptlinie im Nahteil so gewählt ist, daß der Gebrauchswert des Brechwerts im Nachteil bis etwa y = -20 mm konstant ist, wobei der Fernbezugspunkt bei x = 0 und y = 8 mm liegt.

14. Brillenglas nach einem der Ansprüche 1 bis 13,
**dadurch gekennzeichnet, daß** die Hauptkrümmungsrichtungen der progressiven Fläche(n) längs der Hauptlinie im unteren Bereich des Fernteils konstant sind.

15. Brillenglas nach einem der Ansprüche 1 bis 14,
**dadurch gekennzeichnet, daß** zur Brechwertänderung im wesentlichen nur die Vorderfläche beiträgt.

16. Brillenglas nach einem der Ansprüche 1 bis 15,
**dadurch gekennzeichnet, daß** die optische Wirkung in der Fernsichtzone negativ ist.

17. Brillenglas nach einem der Ansprüche 1 bis 16,
**dadurch gekennzeichnet, daß** der Brechungsindex n des Glasmaterials größer als 1,58 ist.

## Claims

1. Progressive spectacle lens with
· at least one region (far sight zone), the power of which is suitable for distance vision,
· at least one region (near sight zone), the power of which is suitable for near vision, and
· at least one progression zone, in which the power changes along a helical line (main line HL) continuously from the power of the far sight zone to the power of the near sight zone,
· wherein at least one surface of the spectacle lens contributes to the change in power,
**characterised in that** the amount of surface astigmatism of at least one of the surfaces contributing to the change in power has a local maximum along at least one section of the spectacle lens with a horizontal plane (y=const., hereafter horizontal section), said maximum being at a distance of not more than 4 mm, preferably 2 mm, from the main line, and at least one local minimum, which does not lie on the main line, and the distance of which from the main line is greater than that of the local maximum.

2. Spectacle lens according to Claim 1, **characterised in that** a local minimum of the amount of surface astigmatism is present on both sides of the local maximum.

3. Spectacle lens according to Claim 1 or Claim 2, **characterised in that** in keeping with the normal case of application, a far sight zone is provided, which is disposed in the upper portion of the spectacle lens, and that the near sight zone(s) is (are) disposed in the lower portion of the spectacle lens.

4. Spectacle lens according to Claim 3, **characterised in that** the horizontal section or sections, against which a local maximum of the amount of the surface astigmatism strikes, lie in the lower portion of the progression zone and/or in the upper portion of the near region.

5. Spectacle lens according to Claim 4, **characterised in that** all horizontal sections, against which a local maximum of the amount of the surface astigmatism strikes, lie in the region y = -11 mm to y = -16 mm, wherein the far reference point lies at x = 0 and y = 8 mm.

6. Spectacle lens according to Claim 4 or 5, **characterised in that** the surface astigmatism has a minimum in the upper portion of the progression zone and in the far portion on the main line.

7. Spectacle lens according to one of Claims 4 to 6, **characterised in that** the total astigmatism has a minimum on the main line in each horizontal section at least between y = 15 mm and y = -20 mm.

8. Spectacle lens according to one of Claims 4 to 7, **characterised in that** the surface astigmatism increases in the lower region of the far portion approximately linearly along the main line.

9. Spectacle lens according to Claim 8, **characterised in that** the gradient of the function of the surface astigmatism on the main line is a function of the base curve and the addition.

10. Spectacle lens according to one of Claims 1 to 9, **characterised in that** the gradient of the horizontal sections at the location of the main line as a function of y is not strictly monotonic.

11. Spectacle lens according to Claim 10, **characterised in that** the gradient of the horizontal sections of the horizontal sections at the location of the main line as a function of y is not monotonic.

12. Spectacle lens according to Claim 11, **characterised in that** the gradient of the horizontal sections at the location of the main line as a function of y is not monotonic only below the so-called far reference point.

13. Spectacle lens according to one of Claims 1 to 12, **characterised in that** the surface power along the main line in the near portion is selected in such a way that the use value of the power in the near portion is constant to about y = -20 mm, wherein the far reference point lies at x = 0 and y = 8 mm.

14. Spectacle lens according to one of Claims 1 to 13, **characterised in that** the main curvature directions of the progressive surface(s) along the main line are constant in the lower region of the far portion.

15. Spectacle lens according to one of Claims 1 to 14, **characterised in that** essentially only the front surface contributes to the change in power.

16. Spectacle lens according to one of Claims 1 to 15, **characterised in that** the optical power in the far sight zone is negative.

17. Spectacle lens according to one of Claims 1 to 16, **characterised in that** the refractive index n of the lens material is greater than 1.58.

## Revendications

1. Verre de lunettes progressif avec
- au moins un domaine (zone de vision de loin) dont la valeur de réfraction est appropriée pour voir de loin,
- au moins un domaine (zone de vision de près) dont la valeur de réfraction est appropriée pour voir de près, et
- au moins une zone de progression dans laquelle la valeur de réfraction varie le long d'une ligne tortueuse (ligne principale, HL) continuellement entre la valeur de réfraction de la zone de vision de loin et la valeur de réfraction de la zone de vision de près,
- au moins une surface du verre de lunettes contribuant à la variation de la valeur de réfraction,
**caractérisé en ce que** le montant de l'astigmatisme de surface d'au moins l'une des surfaces contribuant à la variation de la valeur de réfraction présente, le long d'au moins une coupe du verre de lunettes avec un plan horizontal (y = const., coupe horizontale en soi), un maximum local qui a un écart d'au plus 4 mm, de préférence 2 mm, par rapport à la ligne principale, et au moins un minimum local qui ne se trouve pas sur la ligne principale et dont l'écart par rapport à la ligne principale est plus grand que celui du maximum local.

2. Verre de lunettes selon la revendication 1, **caractérisé en ce qu'**un minimum local du montant de l'astigmatisme de surface est présent des deux côtés du maximum local.

3. Verre de lunettes selon la revendication 1 ou 2, **caractérisé en ce que**, conformément au cas d'application classique, une zone de vision de loin est prévue, qui est disposée dans la partie supérieure du verre de lunettes et **en ce que** la(les) zone(s) de vision de près est(sont) disposée(s) dans la partie inférieure du verre de lunettes.

4. Verre de lunettes selon la revendication 3, **caractérisé en ce que** la ou les coupes horizontales sur lesquelles apparaît un maximum local du montant de l'astigmatisme de surface, se trouvent dans la partie inférieure de la zone de progression et/ou dans la partie supérieure du domaine proche.

5. Verre de lunettes selon la revendication 4, **caractérisé en ce que** toutes les coupes horizontales sur lesquelles apparaît un maximum local du montant de l'astigmatisme de surface, se trouvent dans le domaine y = -11 mm jusqu'à y = -16 mm, le punctum remotum de référence se trouvant à x = 0 et y = 8 mm.

6. Verre de lunettes selon la revendication 4 ou 5, **caractérisé en ce que** l'astigmatisme de surface a un minimum sur la ligne principale dans la partie supérieure de la zone de progression et dans la partie éloignée.

7. Verre de lunettes selon l'une quelconque des revendications 4 à 6, **caractérisé en ce que** l'astigmatisme total a un minimum compris au moins entre y = 15 mm et y = -20 mm sur la ligne principale dans chaque coupe horizontale.

8. Verre de lunettes selon l'une quelconque des revendications 4 à 7, **caractérisé en ce que** l'astigmatisme de surface augmente de manière environ linéaire dans la partie inférieure de la partie éloignée le long de la ligne principale.

9. Verre de lunettes selon la revendication 8, **caractérisé en ce que** l'augmentation de la fonction de l'astigmatisme de surface sur la ligne principale est une fonction de la courbe de base et de l'addition.

10. Verre de lunettes selon l'une quelconque des revendications 1 à 9, **caractérisé en ce que** l'augmentation des coupes horizontales à l'endroit de la ligne principale en tant que fonction d'y n'est pas strictement monotone.

11. Verre de lunettes selon la revendication 10, **caractérisé en ce que** l'augmentation des coupes horizontales à l'endroit de la ligne principale en tant que fonction d'y n'est pas monotone.

12. Verre de lunettes selon la revendication 11, **caractérisé en ce que** l'augmentation des coupes horizontales à l'endroit de la ligne principale en tant que fonction d'y n'est pas monotone uniquement en dessous dudit punctum remotum de référence.

13. Verre de lunettes selon l'une quelconque des revendications 1 à 12, **caractérisé en ce que** la valeur de réfraction de la surface le long de la ligne principale dans la partie proche est choisie de sorte que la valeur d'usage de la valeur de réfraction dans la partie proche soit constante jusqu'à environ y = -20 mm, le punctum remotum de référence se trouvant à x = 0 et y = 8 mm.

14. Verre de lunettes selon l'une quelconque des revendications 1 à 13, **caractérisé en ce que** les directions de courbure principale de la ou des surfaces progressives sont constantes le long de la ligne principale dans le domaine inférieur de la partie éloignée.

15. Verre de lunettes selon l'une quelconque des revendications 1 à 14, **caractérisé en ce que** seule la surface avant contribue pour l'essentiel à la variation de la valeur de réfraction.

16. Verre de lunettes selon l'une quelconque des revendications 1 à 15, **caractérisé en ce que** l'efficacité optique est négative dans la zone de vision de loin.

17. Verre de lunettes selon l'une quelconque des revendications 1 à 16, **caractérisé en ce que** l'indice de réfraction n du verre est supérieur à 1,58.
